# EUROPÄISCHE PATENTSCHRIFT

(11) **EP 4 605 659 B1**
(45) Veröffentlichungstag und Bekanntmachung des Hinweises auf die Patenterteilung: **01.07.2026**
(21) Anmeldenummer: 23777276.9
(22) Anmeldetag: 27.09.2023
(51) Int. Cl.: F16C 35/077

(54) **VERFAHREN ZUM MONTIEREN EINES WÄLZLAGERS UND POSITIONIERVORRICHTUNG ZUM POSITIONIEREN EINER PASSSCHEIBE BEIM MONTIEREN EINES WÄLZLAGERS**
METHOD FOR MOUNTING A ROLLING BEARING AND POSITIONING DEVICE FOR POSITIONING A SHIM RING DURING MOUNTING OF A ROLLING BEARING
PROCÉDÉ DE MONTAGE D'UN PALIER À ROULEMENT ET DISPOSITIF DE POSITIONNEMENT POUR POSITIONNER UNE RONDELLE D'AJUSTAGE LORS DU MONTAGE D'UN PALIER À ROULEMENT

(30) Priorität: 19.10.2022 DE 102022211050
(43) Veröffentlichungstag der Anmeldung: 27.08.2025
(73) Patentinhaber: Robert Bosch GmbH, 70442 Stuttgart (DE)
(72) Erfinder: SCHWARTZ, Daniel, 75446 Wiernsheim (DE); SCHLITTENBAUER, Tobias, 71732 Tamm (DE)
(86) Internationale Anmeldenummer: PCT/EP2023/076643
(87) Internationale Veröffentlichungsnummer: WO 2024/083462

(56) Entgegenhaltungen:
- DE-A1- 102005 002 029
- DE-A1- 102007 053 185
- US-A1- 2004 235 599

## Beschreibung

### Stand der Technik

In Antriebsanordnungen, insbesondere elektrischen Achsen (E-Achsen) werden Lageranordnungen mit Wälzlagern eingesetzt. Um ein Lagerspiel der Wälzlager auszugleichen und die Wälzlager vorzuspannen, können Passscheiben verwendet werden. Dazu werden die vorbelasteten Wälzlager bereits montiert auf der Welle vermessen (Abstand zwischen den Lagern). Zudem werden die entsprechenden Lagersitztiefen vermessen. Anschließend wird unter Berücksichtigung von verschiedenen Einflussfaktoren und der gewünschten Vorspannkraft eine Dicke für die Passscheibe berechnet. Diese wird zwischen Lager und Lagerschulter im Lagersitz montiert.

Zum Montieren der Passscheibe kann diese auf das Wälzlager gelegt werden während das Wälzlager in den Lagersitz gepresst wird.

Nachteilig dabei ist, dass die Passscheibe leicht verrutschen kann, wodurch dieser Prozessschritt vergleichsweise instabil ist.

Die US 2004/235599 A1 zeigt ein Verfahren zum Montieren eines Wälzlagers einer Lageranordnung in ein Gehäuse mit einem ersten Gehäuseteil, wobei das erste Gehäuseteil eine Innenseite und eine Außenseite aufweist, wobei an der Innenseite ein Lagersitz für das Wälzlager angeordnet ist.

Auf der DE 10 2007 053185 A1 ist Verfahren zum Montieren eines Wälzlagers in einer Umlenkrolle bekannt, wobei als Verliersicherung ein Magnet vorgesehen ist.

Aus der DE 10 2005 002029 A1 ist eine Verfahren zur lösbaren Montage eines Wälzlagers auf einer Welle bekannt.

### Offenbarung der Erfindung

Erfindungsgemäß wird ein Verfahren zum Montieren eines Wälzlagers einer Lageranordnung in ein Gehäuse mit einem ersten Gehäuseteil und einem zweiten Gehäuseteil vorgeschlagen.

Bei der Lageranordnung kann es sich um eine Welle mit einem Wälzlager oder mehreren, insbesondere zwei, Wälzlagern handeln, die jeweils auf der Welle montiert sind. Das Gehäuse kann als Getriebegehäuse ausgebildet sein. Das erste Gehäuseteil kann als Getriebedeckel ausgebildet sein.

Das erste Gehäuseteil weist eine Innenseite und eine Außenseite auf. An der Innenseite des ersten Gehäuseteils ist ein Lagersitz für das Wälzlager angeordnet bzw. ausgebildet.

Das Verfahren umfasst die Schritte:
Bereitstellen der Lageranordnung mit dem Wälzlager.

Positionieren (bzw. Montieren) der Lageranordnung in dem zweiten Gehäuseteil.

Bereitstellen einer Passscheibe.

Positionieren der Passscheibe an dem Lagersitz (bzw. an der Innenseite des ersten Gehäuseteils).

Halten (bzw. Fixieren) der Passscheibe im Lagersitz (bzw. an der Innenseite des ersten Gehäuseteils) mittels magnetischer Wechselwirkung. Dabei kann die Passscheibe mit einer Positioniervorrichtung magnetisch wechselwirken.

Verbinden (Montieren) des ersten Gehäuseteils mit dem zweiten Gehäuseteil. Insbesondere Verschließen des zweiten Gehäuseteils mit dem ersten Gehäuseteil. Durch das Verbinden des ersten Gehäuseteils mit dem zweiten Gehäuseteil wird das Wälzlager in den Lagersitz gedrückt. Während des Verbindens des ersten Gehäuseteils mit dem zweiten Gehäuseteil wird die Passscheibe mittels magnetischer Wechselwirkung, insbesondere mit der Positioniervorrichtung, im Lagersitz (bzw. an der Innenseite des ersten Gehäuseteils) gehalten (bzw. fixiert).

Die Passscheibe befindet sich dann, wenn die beiden Gehäuseteile aneinander montiert bzw. miteinander verbunden sind ("Gehäuse montiert") zwischen dem Wälzlager und dem ersten Gehäuseteil. Die Passscheibe wird insbesondere kurz vor und während der Montage des Wälzlagers in den Lagersitz durch magnetische Wechselwirkung in der gewünschten (End-)Position im Lagersitz gehalten.

Dadurch kann die Passscheibe insbesondere während der Montage des Wälzlagers in den Lagersitz in der gewünschten Position gehalten werden, so dass ein Verrutschen der Passscheibe verhindert und ein sicheres Montieren des Wälzlagers in den Lagersitz gewährleistet werden kann.

Gemäß einer Weiterbildung kann das Verfahren mindestens einen der Schritte umfassen:
Ausgeben eines Signals, wenn die Position der Passscheibe im Lagersitz (bzw. an der Innenseite des ersten Gehäuseteils) von einer vorbestimmten (gewünschten) Position abweicht. Das Signal kann ein optisches (bspw. rotes Licht) oder ein akustisches Signal sein.

Ausgeben eines Signals, wenn die Passscheibe an der vorbestimmten (gewünschten) Position im Lagersitz (bzw. an der Innenseite des ersten Gehäuseteils) angeordnet ist. Das Signal kann ein optisches (bspw. grünes Licht) oder ein akustisches Signal sein.

Hierdurch kann die richtige bzw. die falsche Position der Passscheibe mit einfachen Mitteln angezeigt werden.

Gemäß einer Weiterbildung kann zur Durchführung des Verfahrens eine Positioniervorrichtung gemäß nachstehender Ausführungen verwendet werden. Hinsichtlich der damit erzielbaren Vorteile wird auf die diesbezüglichen Ausführungen zur Positioniervorrichtung verwiesen. Zur weiteren Ausgestaltung des Verfahrens können die im Zusammenhang mit der Positioniervorrichtung beschriebenen und/oder die nachfolgend noch erläuterten Maßnahmen dienen.

Erfindungsgemäß wird eine Positioniervorrichtung zum Positionieren einer Passscheibe beim Montieren eines Wälzlagers einer Lageranordnung in ein Gehäuse mit einem ersten Gehäuseteil und einem zweiten Gehäuseteil vorgeschlagen.

Bei der Lageranordnung kann es sich um eine Welle mit einem Wälzlager oder mehreren, insbesondere zwei, Wälzlagern handeln, die jeweils auf der Welle montiert sind. Das Gehäuse kann als Getriebegehäuse ausgebildet sein. Das erste Gehäuseteil kann als Getriebedeckel ausgebildet sein.

Das erste Gehäuseteil weist eine Innenseite und eine Außenseite auf. An der Innenseite des ersten Gehäuseteils ist ein Lagersitz für das Wälzlager angeordnet bzw. ausgebildet.

Die Positioniervorrichtung umfasst mindestens einen Magneten. Die Positioniervorrichtung ist an der Außenseite des ersten Gehäuses positionierbar bzw. anordenbar. Die Positioniervorrichtung ist derart eingerichtet, dass wenn die Positioniervorrichtung an der Außenseite des ersten Gehäuseteils positioniert bzw. angeordnet ist, eine im Lagersitz positionierte bzw. angeordnete Passscheibe mittels magnetischer Wechselwirkung zwischen der Passscheibe und dem Magneten der Positioniervorrichtung im Lagersitz (bzw. an der Innenseite des ersten Gehäuseteils) gehalten bzw. fixiert wird.

Mittels der Positioniervorrichtung kann die Passscheibe insbesondere während der Montage des Wälzlagers in den Lagersitz in der gewünschten Position gehalten werden, so dass ein Verrutschen der Passscheibe verhindert und ein sicheres Montieren des Wälzlagers in den Lagersitz gewährleistet werden kann.

Gemäß einer Weiterbildung kann die Positioniervorrichtung mehrere, insbesondere drei, Magnete umfassen. Die Magnete können in oder an der Positioniervorrichtung derart angeordnet sein, dass die Anordnung der Magnete der Form eines Abschnitts der Passscheibe entspricht. Die Anordnung der Magnete kann der Form eines Abschnitts der Passscheibe entsprechen. Die Magnete können derart angeordnet sein, dass diese gemeinsam auf einem (imaginären) Kreisbogen bzw. Kreisbogenabschnitt liegen.

Dadurch kann die magnetische Wechselwirkung zwischen den Magneten und der Passscheibe und damit die Haltekraft, mit der die Passscheibe gehalten wird, erhöht werden. Damit kann das Risiko eines Verrutschens der Passscheibe weiter reduziert werden.

Der Magnet ist jeweils entlang einer Bewegungsrichtung zwischen einer ersten Position und einer zweiten Position beweglich in der Positioniervorrichtung angeordnet oder gelagert.

In der zweiten Position kann der Magnet minimal und in der ersten Position maximal von der Passscheibe entfernt sein, wenn die Positioniervorrichtung an der Außenseite des ersten Gehäuseteils angeordnet ist. In der zweiten Position kann der Magnet die Außenseite des ersten Gehäuseteils kontaktieren.

Der Magnet kann aufgrund der magnetischen Wechselwirkung mit der Passscheibe in die zweite Position bewegt werden. Ist die Passscheibe nicht an der richtigen bzw. gewünschten Position im Lagersitz angeordnet, so kann die magnetische Wechselwirkung mit der Passscheibe schwächer ausfallen und nicht ausreichen, um den Magneten in die zweite Position zu bewegen. Ist der Magnet in die zweite Position bewegt worden, so kann daraus geschlossen werden, dass die Passscheibe sich an der richtigen bzw. gewünschten Position im Lagersitz befindet.

Erfindungsgemäß umfasst die Positioniervorrichtung eine Vorspanneinrichtung. Der Magnet der Positioniervorrichtung ist mittels der Vorspanneinrichtung jeweils in die erste Position vorgespannt. Die Vorspanneinrichtung kann mindestens eine Schraubenfeder umfassen, wobei der Magnet jeweils mittels der Schraubenfeder in die erste Position vorgespannt sein kann.

Hierdurch kann gewährleistet werden, dass der Magnet, insbesondere, wenn sie nicht mit der Passscheibe in magnetischer Wechselwirkung stehen, in der ersten Position angeordnet ist.

Gemäß einer Weiterbildung kann die Vorspanneinrichtung derart eingerichtet sein, dass die Vorspannung des Magneten oder der Magnete jeweils einstellbar ist. Die Vorspannung kann für jeden Magneten einzeln oder für alle Magneten gemeinsam einstellbar sein.

Durch das Einstellen der Vorspannung kann die Kraft eingestellt werden, die erforderlich ist, um den Magneten oder die Magnete aus der ersten Position heraus bewegen zu können.

Gemäß einer Weiterbildung kann die Positioniervorrichtung eine Sensoreinrichtung umfassen. Die Sensoreinrichtung kann eingerichtet sein, um zu detektieren, ob der Magnet oder die Magnete jeweils in der zweiten Position angeordnet sind. Die Sensoreinrichtung kann eingerichtet sein, um zu detektieren, ob der Magnet oder die Magnete jeweils in der ersten Position angeordnet sind. Die Sensoreinrichtung kann eingerichtet sein, um zu detektieren, ob der Magnet oder die Magnete sich jeweils in der ersten oder der zweiten Position befinden. Die Sensoreinrichtung kann zur Detektion mindestens einen Induktivgeber umfassen.

Hierdurch kann festgestellt werden, in welcher Position der Magnet oder die Magnete entlang der jeweiligen Bewegungsrichtung angeordnet sind. Befinden sich der Magnet oder die Magnete in der ersten Position, wenn die Positioniervorrichtung auf der Außenseite des ersten Gehäuseteils angeordnet ist und die Passscheibe im Lagersitz positioniert ist, kann darauf geschlossen werden, dass die Passscheibe nicht an der vorbestimmten, wunschgemäßen Position positioniert ist. Befinden sich der Magnet oder die Magnete in der zweiten Position kann darauf geschlossen werden, dass die Passscheibe an ihrer vorbestimmten, gewünschten Position positioniert ist.

Gemäß einer Weiterbildung kann die Montagevorrichtung eine Anzeigeeinrichtung umfassen. Die Anzeigeeinrichtung kann eingerichtet sein, um anzuzeigen, ob der Magnet oder die Magnete mittels der Sensoreinrichtung als in der zweiten Position angeordnet detektiert wurden. Die Anzeigeeinrichtung kann eingerichtet sein, um anzuzeigen, ob der Magnet oder die Magnete mittels der Sensoreinrichtung als in der ersten Position angeordnet detektiert wurden. Die Anzeigeeinrichtung kann hierfür zur optischen Anzeige eingerichtet sein. Auch eine akustische Anzeige ist denkbar.

Hierdurch kann angezeigt werden, in welcher Position sich der Magnet oder die Magnete entlang der jeweiligen Bewegungsrichtung angeordnet sind und damit ob die Passscheibe ordnungsgemäß positioniert wurde.

Nachfolgend werden Ausführungsformen der Erfindung unter Bezugnahme auf die beiliegenden Zeichnungen erläutert. Es zeigen:
- Figur 1: eine perspektivische Ansicht einer Positioniervorrichtung gemäß einem ersten Ausführungsbeispiel;
- Figur 2: eine perspektivische Ansicht der Positioniervorrichtung gemäß Figur 1, die auf einer Außenseite eines ersten Gehäuseteils positioniert ist;
- Figur 3: eine perspektivische Ansicht der Positioniervorrichtung gemäß einem zweiten Ausführungsbeispiel;
- Figur 4: eine Schnittansicht der Positioniervorrichtung gemäß Figur 3 und
- Figur 5: eine Darstellung eines Verfahrens zum Montieren eines Wälzlagers.

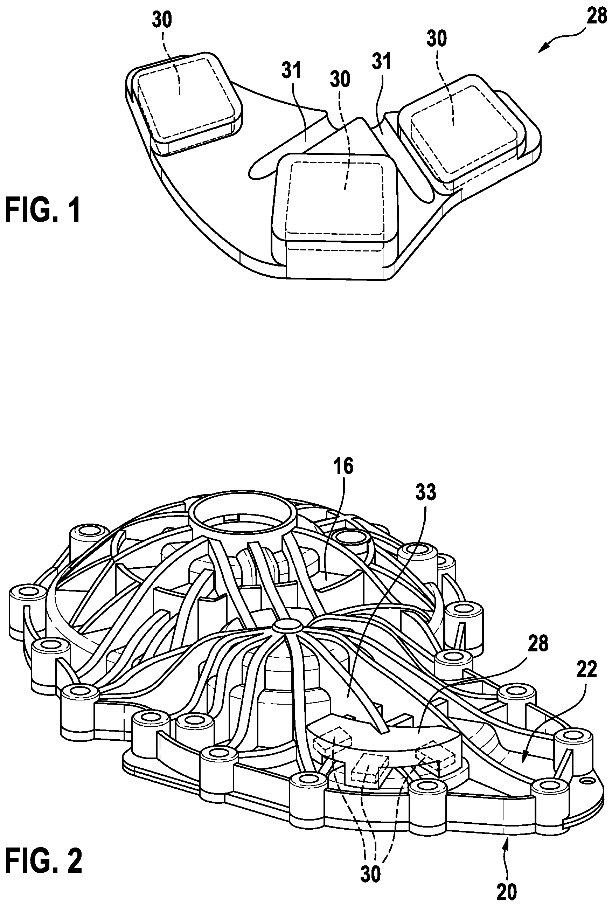

Figur 1 zeigt eine perspektivische Ansicht einer Positioniervorrichtung 28 gemäß einem ersten Ausführungsbeispiel. Die Positioniervorrichtung 28 weist vorliegend drei Magnete 30 auf, die entlang eines Kreisbogenabschnitts angeordnet sind.

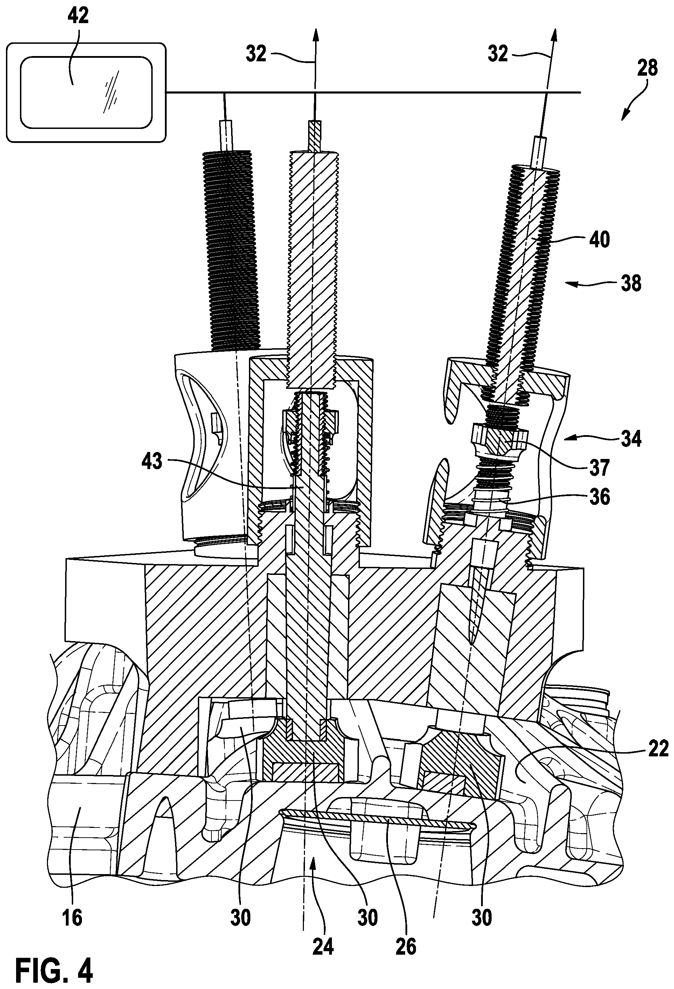

Die Positioniervorrichtung 28 ist zum Positionieren einer Passscheibe 26 beim Montieren eines Wälzlagers 10 einer Lageranordnung 12 in ein Gehäuse 14 mit einem ersten Gehäuseteil 16 einem zweiten Gehäuseteil 18 eingerichtet (vgl. Figur 4). Das erste Gehäuseteil 16 weist eine Innenseite 20 und eine Außenseite 22 auf (vgl. Figur 2), wobei an der Innenseite 20 des ersten Gehäuseteils 16 ein Lagersitz 24 für das Wälzlager 10 angeordnet ist.

Figur 2 zeigt eine perspektivische Ansicht der Positioniervorrichtung 28 gemäß Figur 1, die auf der Außenseite 22 des ersten Gehäuseteils 16 positioniert ist. Das erste Gehäuseteil 16 ist vorliegend als Gehäusedeckel ausgebildet. Die Positioniervorrichtung 28 ist eingerichtet, um auf der Außenseite 22 des ersten Gehäuseteils 16 positioniert werden zu können. Die Positioniervorrichtung 28 weist hierzu Ausnehmungen 31 auf (vgl. Figur 2), die mit Erhebungen 33 (bzw. Rippen), die auf der Außenseite 22 des ersten Gehäuseteils 16 angeordnet sind, korrespondieren.

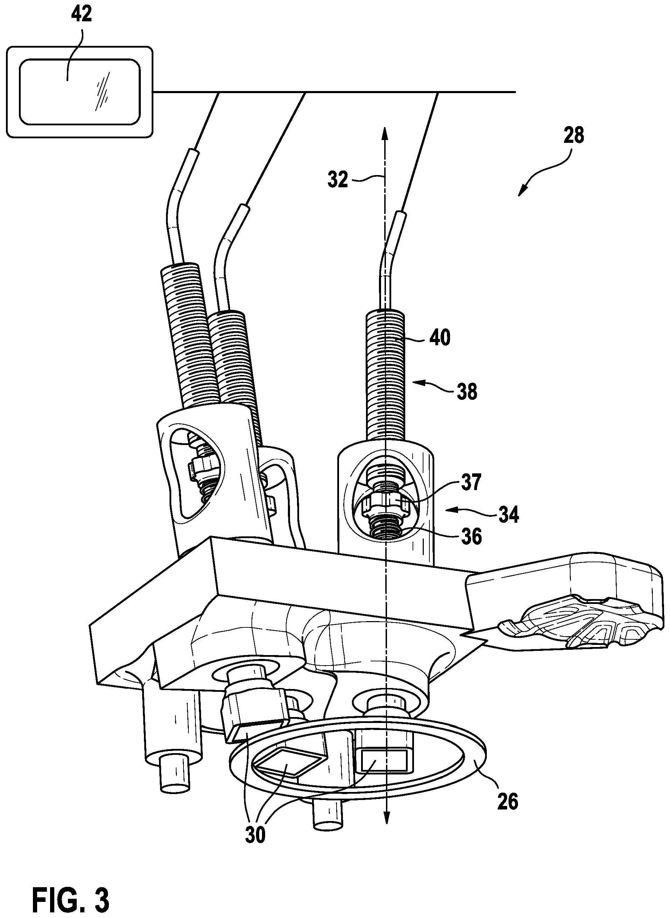

Figur 3 zeigt eine perspektivische Ansicht und Figur 4 eine Schnittansicht der Positioniervorrichtung 28 gemäß einem zweiten Ausführungsbeispiel. Das zweite Ausführungsbeispiel der Positioniervorrichtung 28 unterscheidet sich von dem ersten Ausführungsbeispiel durch Folgendes:
Die Positioniervorrichtung 28 weist vorliegend drei bewegliche Magnete 30 auf. Die Magnete 30 sind jeweils entlang einer jeweiligen Bewegungsrichtung 32 zwischen einer ersten und einer zweiten Position beweglich ausgebildet.

Die Magnete 30 sind jeweils mittels einer Vorspanneinrichtung 34 vorgespannt. Die Vorspanneinrichtung 34 umfasst vorliegend drei Schraubenfedern 36, wobei jede Schraubenfeder 36 einen Magneten 30 in die erste Position vorgespannt. In der ersten Position sind die Magnete maximal von der Außenseite 22 des ersten Gehäuseteils 16 entfernt, wenn die Positioniervorrichtung 28 auf der Außenseite 22 des ersten Gehäuseteils 16 positioniert ist. In der zweiten Position sind die Magnete 30 minimal von der Außenseite 22 des ersten Gehäuseteils 16 entfernt, wenn die Positioniervorrichtung 28 auf der Außenseite 22 des ersten Gehäuseteils 16 positioniert ist. In der zweiten Position kontaktieren die Magnete 30 die Außenseite 22 des ersten Gehäuseteils 16. Figur 4 zeigt die Positioniervorrichtung 28 in der zweiten Position.

Die Spannkraft der Schraubenfedern 36, und damit die Vorspannkraft der Vorspanneinrichtung 34 kann jeweils mittels einer Einstellmutter 37 eingestellt werden.

Die Positioniervorrichtung 28 umfasst vorliegend eine Sensoreinrichtung 38. Die Sensoreinrichtung 38 umfasst drei Induktivgeber 40. Mittels der drei Induktivgeber 40 kann festgestellt werden, ob die Magnete 30 sich in der ersten oder in der zweiten Position befinden. Die Magnete 30 sind vorliegend an Hubstangen 43 angeordnet, wobei eine Bewegung der Magnete 30 entlang der Bewegungsrichtung 32 auch eine Bewegung der Hubstangen 43 entlang der Bewegungsrichtung 32 bewirkt. Die Induktivgeber 40 sind derart angeordnet und eingerichtet, dass sie eine Bewegung der Hubstangen 43 und damit eine Bewegung der Magnete 30, insbesondere aus der ersten Position heraus, detektieren können.

Die Positioniervorrichtung 28 umfasst weiter eine Anzeigeeinrichtung 42. Die Anzeigeeinrichtung 42 ist vorliegend mit der Sensoreinrichtung 38 verbunden bzw. gekoppelt und ist eingerichtet, um anzuzeigen, ob die Sensoreinrichtung 38 die Magnete 30 als in der ersten oder in der zweiten Position angeordnet diktieren. Die Anzeigeneinrichtung 42 ist in den Figuren lediglich schematisch angedeutet.

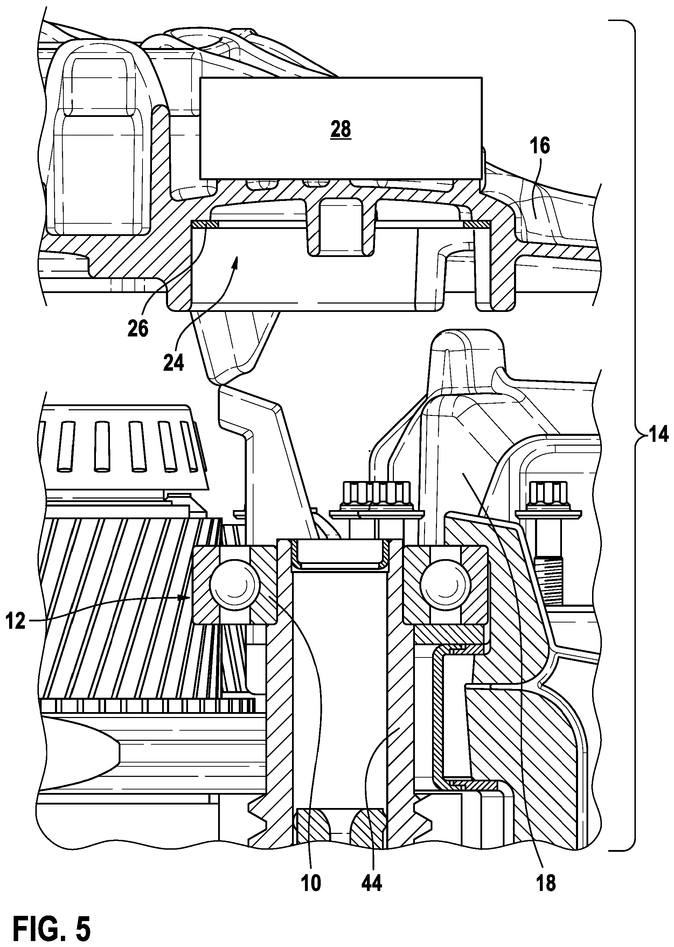

Figur 5 zeigt eine Darstellung eines Verfahrens zum Montieren des Wälzlagers 10. Zunächst wird das Wälzlager 10 auf einer Welle 44 montiert. Die so entstandene Lageranordnung 12, bestehend aus dem Wälzlager 10 und einer Welle 44, wird in dem zweiten Gehäuseteil 18 montiert bzw. positioniert.

Die Positioniereinrichtung 28 wird auf der Außenseite 22 des ersten Gehäuseteils 16 positioniert. Die Passscheibe 26 wird (von unten bzw. der Innenseite 20 des ersten Gehäuseteils 16) in den Lagersitz 24 positioniert.

Die Passscheibe 26 wird aufgrund magnetischer Wechselwirkung mit der Positioniervorrichtung 28 im Lagersitz 24 gehalten.

Anschließend wird das erste Gehäuseteil 16 mit dem zweiten Gehäuseteil 18 verbunden bzw. auf das zweite Gehäuseteil 18 aufgesetzt. Dabei wird das Wälzlager 10 in den Lagersitz 24 hineingedrückt, wobei die Passscheibe 26 zwischen dem Wälzlager 10 und im Lagersitz 24 eingepresst wird. Die Passscheibe 26 wird dabei stets mittels der magnetischen Wechselwirkung mit der Positioniervorrichtung 28 im Lagersitz 24 an der gewünschten Position gehalten.

## Patentansprüche

1. Verfahren zum Montieren eines Wälzlagers (10) einer Lageranordnung (12) in ein Gehäuse (14), insbesondere ein Getriebegehäuse, mit einem ersten Gehäuseteil (16), insbesondere einem Gehäusedeckel, und einem zweiten Gehäuseteil (18), wobei das erste Gehäuseteil (16) eine Innenseite (20) und eine Außenseite (22) aufweist, wobei an der Innenseite (20) des ersten Gehäuseteils (16) ein Lagersitz (24) für das Wälzlager (10) angeordnet ist, wobei das Verfahren die Schritte umfasst:
- Bereitstellen der Lageranordnung (12) mit dem Wälzlager (10);
- Positionieren der Lageranordnung (12) in dem zweiten Gehäuseteil (18);
- Bereitstellen einer Passscheibe (26);
- Positionieren der Passscheibe (20) an dem Lagersitz (24);
- Halten der Passscheibe (26) im Lagersitz (24) mittels magnetischer Wechselwirkung, insbesondere mit einer Positioniervorrichtung (28), und
- Verbinden des ersten Gehäuseteils (16) mit dem zweiten Gehäuseteil (18), wobei durch das Verbinden des ersten Gehäuseteils (16) mit dem zweiten Gehäuseteil (18) das Wälzlager (10) in den Lagersitz (24) gedrückt wird, wobei während des Verbindens des ersten Gehäuseteils (16) mit dem zweiten Gehäuseteil (18) die Passscheibe (26) mittels magnetischer Wechselwirkung, insbesondere mit der Positioniervorrichtung (28), im Lagersitz (24) gehalten wird.

2. Verfahren nach Anspruch 1, **dadurch gekennzeichnet, dass** das Verfahren den Schritt umfasst:
- Ausgeben eines, insbesondere optischen, Signals, wenn die Position der Passscheibe (26) im Lagersitz (24) von einer vorbestimmten Position abweicht.

3. Verfahren nach Anspruch 1 oder 2, **dadurch gekennzeichnet, dass** zur Durchführung des Verfahrens eine Positioniervorrichtung (28) nach einem der Ansprüche 4 bis 10 verwendet wird.

4. Positioniervorrichtung (28) zum Positionieren einer Passscheibe (26) beim Montieren eines Wälzlagers (10) einer Lageranordnung (12), mittels eines Verfahrens nach einem der vorhergehenden Ansprüche, in ein Gehäuse (14), insbesondere ein Getriebegehäuse, mit einem ersten Gehäuseteil (16), insbesondere einem Gehäusedeckel, und einem zweiten Gehäuseteil (18), wobei das erste Gehäuseteil (16) eine Innenseite (20) und eine Außenseite (22) aufweist, wobei an der Innenseite (20) des ersten Gehäuseteils (16) ein Lagersitz (24) für das Wälzlager (10) angeordnet ist, wobei die Positioniervorrichtung (28) mindestens einen Magneten (30) umfasst, wobei die Positioniervorrichtung (28) an der Außenseite (22) des ersten Gehäuseteils (16) positionierbar ist und derart eingerichtet ist, dass wenn die Positioniervorrichtung (28) an der Außenseite (22) des ersten Gehäuseteils (16) positioniert ist, eine im Lagersitz (24) positionierte Passscheibe (26) mittels magnetischer Wechselwirkung zwischen der Passscheibe (26) und dem Magneten (30) der Positioniervorrichtung (28) im Lagersitz (24) gehalten wird, wobei der Magnet (30) jeweils entlang einer Bewegungsrichtung (32) zwischen einer ersten Position und einer zweiten Position beweglich in der Positioniervorrichtung (28) angeordnet oder gelagert ist, wobei die Positioniervorrichtung (28) eine Vorspanneinrichtung (34), insbesondere mit mindestens einer Schraubenfeder (36), umfasst, wobei der Magnet (30)) mittels, insbesondere der Schraubenfeder (36), der Vorspanneinrichtung (34) jeweils in die erste Position vorgespannt ist.

5. Positioniervorrichtung (28) nach Anspruch 4, **dadurch gekennzeichnet, dass** die Positioniervorrichtung (28) mehrere, insbesondere drei, Magnete (30) umfasst, wobei die Magnete (30) an oder in der Positioniervorrichtung (28) derart angeordnet sind, dass die Anordnung der Magnete (30) der Form eines Abschnitts der Passscheibe (26), insbesondere der Form der Passscheibe (26), entspricht.

6. Positioniervorrichtung (28) nach Anspruch 4, **dadurch gekennzeichnet, dass** die Vorspanneinrichtung (34) derart eingerichtet ist, dass die Vorspannung des Magneten (30) jeweils einstellbar ist.

7. Positioniervorrichtung (28) nach Anspruch 6, **dadurch gekennzeichnet, dass** die Positioniervorrichtung (28) eine Sensoreinrichtung (38) umfasst, wobei die Sensoreinrichtung (38) eingerichtet ist, um zu detektieren, ob der Magnet (30) (30) jeweils in der zweiten Position angeordnet sind, insbesondere wobei die Sensoreinrichtung (36) zur Detektion mindestens einen Induktivgeber (40) umfasst.

8. Positioniervorrichtung (28) nach Anspruch 7, **dadurch gekennzeichnet, dass** die Positioniervorrichtung (28) eine Anzeigeeinrichtung (42) umfasst, wobei die Anzeigeeinrichtung (42) eingerichtet ist, um, insbesondere optisch, anzuzeigen, ob der Magnet (30) mittels der Sensoreinrichtung (38) als in der zweiten Position angeordnet detektiert wurde.

## Claims

1. Method for mounting a roller bearing (10) of a bearing arrangement (12) in a housing (14), in particular a gearbox housing, having a first housing part (16), in particular a housing cover, and a second housing part (18), wherein the first housing part (16) has an inner side (20) and an outer side (22), wherein a bearing seat (24) for the roller bearing (10) is arranged on the inner side (20) of the first housing part (16), wherein the method comprises the steps of:
- providing the bearing arrangement (12) with the roller bearing (10);
- positioning the bearing arrangement (12) in the second housing part (18);
- providing a shim ring (26);
- positioning the shim ring (20) on the bearing seat (24);
- holding the shim ring (26) in the bearing seat (24) by means of magnetic interaction, in particular with a positioning device (28), and
- connecting the first housing part (16) to the second housing part (18), wherein the roller bearing (10) is pressed into the bearing seat (24) by connecting the first housing part (16) to the second housing part (18), wherein, during connection of the first housing part (16) to the second housing part (18), the shim ring (26) is held in the bearing seat (24) by means of magnetic interaction, in particular with the positioning device (28).

2. Method according to Claim 1, **characterized in that** the method comprises the step of:
- outputting an, in particular, optical signal when the position of the shim ring (26) in the bearing seat (24) deviates from a predetermined position.

3. Method according to Claim 1 or 2, **characterized in that** a positioning device (28) according to any of Claims 4 to 10 is used for carrying out the method.

4. Positioning device (28) for positioning a shim ring (26) when mounting a roller bearing (10) of a bearing arrangement (12), by means of a method according to any of the preceding claims, in a housing (14), in particular a gearbox housing, having a first housing part (16), in particular a housing cover, and a second housing part (18), wherein the first housing part (16) has an inner side (20) and an outer side (22), wherein a bearing seat (24) for the roller bearing (10) is arranged on the inner side (20) of the first housing part (16), wherein the positioning device (28) comprises at least one magnet (30), wherein the positioning device (28) can be positioned on the outer side (22) of the first housing part (16) and is configured in such a way that, when the positioning device (28) is positioned on the outer side (22) of the first housing part (16), a shim ring (26) positioned in the bearing seat (24) is held in the bearing seat (24) by means of magnetic interaction between the shim ring (26) and the magnet (30) of the positioning device (28), wherein the magnet (30) is arranged or mounted in the positioning device (28) movably between a first position and a second position in each case along a direction of movement (32), wherein the positioning device (28) comprises a preloading device (34), in particular with at least one helical spring (36), wherein the magnet (30) is preloaded by means of, in particular the helical spring (36) of, the preloading device (34) to the first position in each case.

5. Positioning device (28) according to Claim 4, **characterized in that** the positioning device (28) comprises a plurality of, in particular three, magnets (30), wherein the magnets (30) are arranged on or in the positioning device (28) in such a way that the arrangement of the magnets (30) corresponds to the shape of a portion of the shim ring (26), in particular the shape of the shim ring (26).

6. Positioning device (28) according to Claim 4, **characterized in that** the preloading device (34) is configured in such a way that the preloading of the magnet (30) is adjustable in each case.

7. Positioning device (28) according to Claim 6, **characterized in that** the positioning device (28) comprises a sensor device (38), wherein the sensor device (38) is configured to detect whether the magnet (30) (30) are arranged in the second position in each case, in particular wherein the sensor device (36) for detection comprises at least one inductive encoder (40).

8. Positioning device (28) according to Claim 7, **characterized in that** the positioning device (28) comprises an indicator device (42), wherein the indicator device (42) is configured to, in particular optically, indicate whether the magnet (30) has been detected by means of the sensor device (38) as being arranged in the second position.

## Revendications

1. Procédé de montage d'un palier à roulement (10) d'un ensemble de palier (12) dans un boîtier (14), en particulier un boîtier de transmission, avec une première partie de boîtier (16), en particulier un couvercle de boîtier, et une deuxième partie de boîtier (18), la première partie de boîtier (16) comportant une face intérieure (20) et une face extérieure (22), un siège de palier (24) pour le palier à roulement (10) étant disposé sur la face intérieure (20) de la première partie de boîtier (16), le procédé comprenant les étapes de :
- fourniture de l'ensemble de palier (12) avec le palier à roulement (10) ;
- positionnement de l'ensemble de palier (12) dans la deuxième partie de boîtier (18) ;
- fourniture d'une rondelle d'ajustage (26) ;
- positionnement de la rondelle d'ajustage (20) sur le siège de palier (24) ;
- maintien de la rondelle d'ajustage (26) dans le siège de palier (24) au moyen d'une interaction magnétique, en particulier avec un dispositif de positionnement (28), et
- liaison de la première partie de boîtier (16) à la deuxième partie de boîtier (18), le palier à roulement (10) étant pressé dans le siège de palier (24) par la liaison de la première partie de boîtier (16) à la deuxième partie de boîtier (18), la rondelle d'ajustage (26) étant maintenue dans le siège de palier (24) au moyen d'une interaction magnétique, en particulier avec le dispositif de positionnement (28), lors de la liaison de la première partie de boîtier (16) à la deuxième partie de boîtier (18).

2. Procédé selon la revendication 1, **caractérisé en ce que** le procédé comprend l'étape de :
- émission d'un signal, en particulier optique, lorsque la position de la rondelle d'ajustage (26) dans le siège de palier (24) s'écarte d'une position prédéterminée.

3. Procédé selon la revendication 1 ou 2, **caractérisé en ce qu'**un dispositif de positionnement (28) selon l'une des revendications 4 à 10 est utilisé pour la mise en œuvre du procédé.

4. Dispositif de positionnement (28) pour positionner une rondelle d'ajustage (26) lors du montage d'un palier à roulement (10) d'un ensemble de palier (12), au moyen d'un procédé selon l'une des revendications précédentes, dans un boîtier (14), en particulier un boîtier de transmission, avec une première partie de boîtier (16), en particulier un couvercle de boîtier, et une deuxième partie de boîtier (18), la première partie de boîtier (16) comportant une face intérieure (20) et une face extérieure (22), un siège de palier (24) pour le palier à roulement (10) étant disposé sur la face intérieure (20) de la première partie de boîtier (16), le dispositif de positionnement (28) comportant au moins un aimant (30), le dispositif de positionnement (28) pouvant être positionné sur la face extérieure (22) de la première partie de boîtier (16) et étant mis au point de telle manière que, lorsque le dispositif de positionnement (28) est positionné sur la face extérieure (22) de la première partie de boîtier (16), une rondelle d'ajustage (26) positionnée dans le siège de palier (24) est maintenue dans le siège de palier (24) au moyen d'une interaction magnétique entre la rondelle d'ajustage (26) et l'aimant (30) du dispositif de positionnement (28), l'aimant (30) étant disposé ou monté de manière mobile dans le dispositif de positionnement (28) respectivement le long d'une direction de déplacement (32) entre une première position et une deuxième position, le dispositif de positionnement (28) comprenant un système de précontrainte (34), en particulier avec au moins un ressort hélicoïdal (36), l'aimant (30) étant précontraint respectivement dans la première position au moyen, en particulier, du ressort hélicoïdal (36) du système de précontrainte (34).

5. Dispositif de positionnement (28) selon la revendication 4, **caractérisé en ce que** le dispositif de positionnement (28) comprend plusieurs, en particulier trois aimants (30), les aimants (30) étant disposés sur ou dans le dispositif de positionnement (28) de telle manière que la disposition des aimants (30) correspond à la forme d'une section de la rondelle d'ajustage (26), en particulier à la forme de la rondelle d'ajustage (26).

6. Dispositif de positionnement (28) selon la revendication 4, **caractérisé en ce que** le système de précontrainte (34) est mis au point de telle manière que la précontrainte de l'aimant (30) peut être réglée respectivement.

7. Dispositif de positionnement (28) selon la revendication 6, **caractérisé en ce que** le dispositif de positionnement (28) comprend un système de détection (38), le système de détection (38) étant mis au point pour détecter si l'aimant (30) (30) sont disposés respectivement dans la deuxième position, en particulier le système de détection (36) comprenant pour la détection au moins un émetteur inductif (40).

8. Dispositif de positionnement (28) selon la revendication 7, **caractérisé en ce que** le dispositif de positionnement (28) comprend un système d'affichage (42), le système d'affichage (42) étant mis au point pour afficher, en particulier optiquement, si l'aimant (30) a été détecté comme étant disposé dans la deuxième position au moyen du système de détection (38).
